# EUROPEAN PATENT SPECIFICATION

(11) **EP 0 369 609 B1**
(45) Date of publication and mention of the grant of the patent: **26.01.1994**
(21) Application number: 89310632.8
(22) Date of filing: 17.10.1989
(51) Int. Cl.: G02B 6/42, H01S 3/025

(54) **A semiconductor laser device and a method of producing same**
Halbleiterlaservorrichtung und Verfahren zu deren Herstellung
Dispositif laser à semi-conducteur et sa méthode de production

(30) Priority: 18.11.1988 JP 293415/88
(43) Date of publication of application: 23.05.1990
(73) Proprietor: MITSUBISHI DENKI KABUSHIKI KAISHA, Tokyo (JP)
(72) Inventor: Nagai, Seiichi, 1, Mizuhara 4-chome Itami-shi Hyogo-ken (JP); Ishii, Mitsuo, 1, Mizuhara 4-chome Itami-shi Hyogo-ken (JP); Hasegawa, Kazuyoshi, 1, Mizuhara 4-chome Itami-shi Hyogo-ken (JP)
(74) Representative: Beresford, Keith Denis Lewis

(56) References cited:
- EP-A- 0 021 473
- JP-A-63 228 112
- PATENT ABSTRACTS OF JAPAN, vol. 11, no. 84 (P-556), 13th March 1987;& JP-A-61 239 209
- PATENT ABSTRACTS OF JAPAN, vol. 6, no. 95 (E-110), 3rd June 1982;& JP-A-57 028 392
- PATENT ABSTRACTS OF JAPAN, vol. 9, no. 20 (P-330), 26th January 1985;& JP-A-59 166 907
- PATENT ABSTRACTS OF JAPAN, vol. 12, no. 12 (P-655)[2859], 14th January 1988;& JP-A-62 170 918

## Description

The present invention relates to a semiconductor laser device and a method of producing same, and more particularly to those which are combined with an optical fibre and used in optical communications.

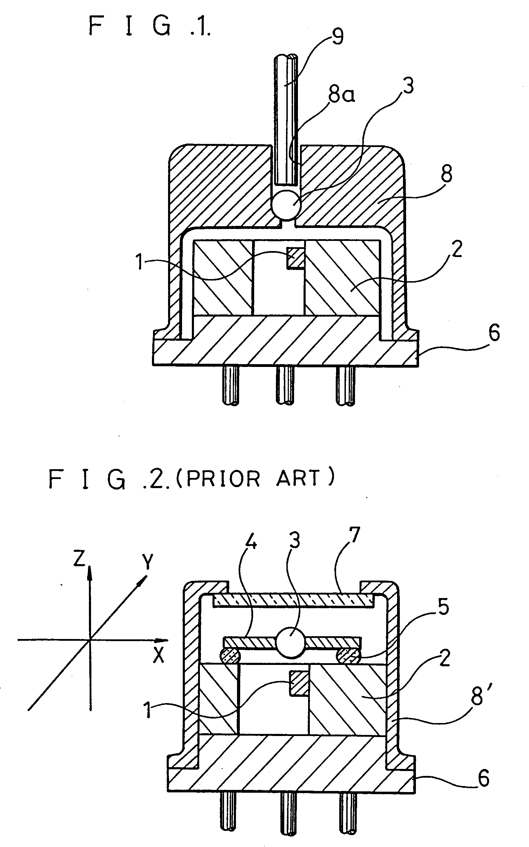

Figure 2 shows a cross-sectional structural view of a prior art semiconductor laser device. A further example can be found in JP-A-58 040545. In figure 2, reference numeral 1 designates a laser diode (hereinafter referred to as "LD") chip. This LD chip 1 is mounted on a heat sink 2 comprising silver or copper. Spherical lens 3 which is held by copper lens holder 4 is fixed onto heat sink 2 by solder 5 to collimate light from LD chip 1. Heat sink 2 is provided on an iron stem 6.

Silver or copper heat sink 2 onto which LD chip 1 is bonded is mounted on iron stem 6 so that the light emission point of LD chip 1 is coincident with the centre axis of stem 6, and copper lens holder 4 to which spherical lens 3 is attached is fixed by a solder 5 in a state where the optical axis of lens 3 is coincident with LD chip 1, cap 8' having a window glass 7 is welded to this stem 6.

The optical axis alignment in the production process of this prior art laser device will be described.

In this prior art device, the optical axis alignment has been conducted as in the following. That is, a light receiving apparatus is provided opposite to the LD chip 1, and the LD chip 1 is made light emitting in a state where the lens holder 4 is mounted on the heat sink 2 by the solder 5. The lens holder 4 is moved slightly in the X and Y direction while conducting monitoring by the light receiving apparatus, and the holder 4 is fixed to a position where the optical axis is aligned. Thereafter, the device is heated up in the state where the holder is fixed, and the holder 4 is fixed to the heat sink 2 by the solder 5.

In the laser device produced as such, the optical axis alignment in the X and Y direction are conducted, and the light emission point of the LD chip 1 is coincided with the centre axis of the stem 6. Accordingly, a high coupling efficiency with an optical fibre is obtained.

In the prior art semiconductor laser device, however, there may arise variations in the optical axis alignment positions in the Z axis direction due to variations in up and down direction in the attachment positions of the LD chip to the heat sink and variations in the thickness of solder which fixes the lens holder, and accordingly coupling efficiency with an optical fibre is likely to vary from one device to another.

The present invention is intended as a remedy.

In accordance with a first aspect of the invention there is provided a semiconductor laser device comprising a laser diode chip mounted on a heat sink mounted on base with a cap having a through-bore and being fixed to said base so as to cover said chip, further comprising
a lens held in said through-bore for collimating light from said chip
characterised in that
an optical fibre for guiding said collimated light is fixed in said through-bore at a predetermined distance with respect to the lens.

In accordance with a second aspect of this invention there is provided a method of producing a semiconductor laser device, comprising the steps of:
mounting a laser diode chip on a a heat sink mounted on a base;
positioning a cap on said base, said cap having a through-bore holding a lens and being capable of holding an optical fibre at a predeterined distance with respect to the lens;
fixing said cap to said base after aligning the cap with respect to the optical axis of the device by slightly moving said cap in X and Y directions orthogonal to the optical axis with said laser diode in use; and
making optical axis alignment of said optical fibre in the Z axis direction by slightly moving said optical fibre in Z direction with said laser diode in use after having inserted an optical fibre into said through-bore of said cap.

It is an advantage of this invention that optical axis alignment in each of the three X, Y and Z orthagonal directions is possible. Consequently, with appropriate adjustment, a good coupling efficiency to optical fibre can be achieved. Variations, between devices, in coupling efficiency can be reduced significantly.

In the accompanying drawings
Figure 1 is a cross-sectional view showing a semiconductor laser device according to an embodiment of the present invention; and
Figure 2 is a cross-sectional view showing a semiconductor laser device according to the prior art.

For a better understanding of this invention, a preferred embodiment will be described below. The description which follows is given by way of example only.

An embodiment of the present invention will be described in detail with reference to drawing.

Figure 1 shows a semiconductor laser device according to an embodiment of the present invention. In figure 1, reference numeral 1 designates an LD chip. LD chip 1 is mounted on a silver or copper heat sink 2. Heat sink 2 is provided on an iron stem 6. A Kovar (Trade Mark) cap 8 is provided on stem 6 so as to cover LD chip 1 mounted on heat sink 2. A spherical lens 3 is arranged in a through-bore 8a provided at the centre of cap 8. An optical fibre 9 is inserted in the through-bore 8a.

The heat sink 2 onto which the LD chip 1 is bonded is mounted on the stem 6 so that the light emitting point of the LD chip 1 is coincident with the centre axis of the stem 6, and the cap 8, provided with the spherical lens 3 and optical fibre 9, is fixed onto the stem 6 so as to cover the LD chip 1.

The optical axis alignment in the production process of this laser device will be described.

First of all, a heat sink 2 onto which the LD chip 1 is bonded is mounted on a stem 6 so that the light emitting point of the LD chip 1 is coincident with the centre axis of the stem 6, and thereafter a cap 8 is placed over the stem 6 in a state where a lens 3 is held in the through-bore 8a of the cap 8. Herein, the production of the through-bore 8a of the cap 8 is conducted by a mechanical processing such as drilling, and in case where the number of products is large, a press may be employed. Next, the LD chip 1 is made light emitting, and while monitoring the light emitted with a light receiving apparatus (not shown), provided opposite to the LD chip 1, the cap 8 is moved slightly in the X and Y directions, and at a position where the optical axis is aligned, the cap 8 is fixed onto the stem 6 by a capping apparatus. Thereafter, an optical fibre 9 is inserted into the through-bore 8a of the cap 8, the LD chip 1 is made light emitting, the light emission at the other end of the optical fibre 9 is monitored by a light receiving apparatus, the optical fibre 9 is slightly moved in the Z axis direction, and at a position where the optical axis is aligned, the optical fibre 9 is fixed to the cap 8 by a plastics adhesive (not shown) such as epoxy series resin.

In the embodiment constructed as described above, because the optical axis alignments are conducted in X and Y directions as well as in Z direction, the coupling efficiency with an optical fibre is improved, and variations in device-dependant coupling coefficients are reduced.

Furthermore, when a capping apparatus allowing slight movements in X and Y directions is used, the optical axis alignments in the X and Y directions can be performed automatically and mechanically, and a quite considerable enhancement in production efficiency can be expected.

While in the above illustrated embodiment the optical axis alignment in the Z direction is conducted after optical axis alignments in the X and Y directions, the optical axis alignments in the X, Y, and Z directions can be conducted at the same time by using a capping apparatus capable of handling an optical fibre. In this case, the production efficiency will be further enhanced.

As discussed above, in the semiconductor laser device a laser diode chip is mounted on a stem via a heat sink and a cap is welded and fixed to a stem, the cap is provided with a through-bore capable of holding a lens and receiving an optical fibre inserted to a desired depth. Optical axis alignments thus can be conducted in three orthogonal directions, i.e. X, Y, and Z axes directions. Accordingly, a good coupling efficiency with an optical fibre is obtained and variations between devices in this coupling efficiency can be greatly reduced.

## Claims

1. A semiconductor laser device comprising a laser diode chip (1) mounted on a heat sink (2) mounted on a base (6) and a cap (8) having a through-bore (8a), said cap being fixed to said base (6) so as to cover said chip (8), further comprising
a lens (3) held in said through-bore (8a) for collimating light from said chip (1)
characterised in that
an optical fibre (9) for guiding said collimated light is fixed in said through-bore (8a) at a predetermined distance with respect to the lens.

2. A semiconductor laser device as defined in claim 1, wherein said cap (8) is made from Kovar.

3. A semiconductor laser device as defined in claim 1, wherein said lens (3) is a spherical lens.

4. A method of producing a semiconductor laser device, comprising the steps of:
mounting a laser diode chip (1) on a heat sink (2) mounted on a base (6);
positioning a cap (8) on said base (6), said cap having a through-bore (8a) holding a lens (3) and being capable of holding an optical fibre (9) at a predetermined distance with respect to the lens;
fixing said cap (8) to said base (6) after aligning the cap with respect to the optical axis of the device by slightly moving said cap (8) in X and Y directions orthogonal to the optical axis with said laser diode in use; and
making optical axis alignment of said optical fibre (9) in the Z axis direction by slightly moving said optical fibre (9) in Z direction with said laser diode in use after having inserted an optical fibre (9) into said through-bore (8a) of said cap (8).

5. A method of producing a semiconductor laser device as defined in claim 4, wherein said slight movements of said cap (8) in the X and Y directions are automatically mechanically conducted.

6. A method of producing a semiconductor laser device as defined in claim 4, wherein said slight movement of said optical fibre (9) in the Z direction is performed automatically and mechanically.

## Patentansprüche

1. Halbleiterlaservorrichtung mit einem Laserdioden-Chip (1), der an einem auf einem Sockel (6) sitzenden Kühlkörper (2) angebracht ist, und einer eine Durchgangsöffnung (8a) aufweisenden Kappe (8), die so auf dem Sockel (6) befestigt ist, daß sie den Chip (1) bedeckt, wobei die Halbleiterlaservorrichtung darüberhinaus
eine Linse (3) enthält, die in der Durchgangsöffnung (8a) festgehalten wird, damit sie von dem Chip (1) kommendes Licht parallel richtet,
dadurch gekennzeichnet, daß
ein Lichtwellenleiter (9) zum Leiten des parallel gerichteten Lichts in einem vorbestimmten Abstand zu der Linse in der Durchgangsöffnung (8a) befestigt ist.

2. Halbleiterlaservorrichtung nach Anspruch 1, wobei die Kappe (8) aus Kovar hergestellt ist.

3. Halbleiterlaservorrichtung nach Anspruch 1, wobei die Linse (3) eine Kugellinse ist.

4. Verfahren zur Herstellung einer Halbleiterlaservorrichtung, bei dem
ein Laserdioden-Chip (1) an einem Kühlkörper (2) angebracht wird, der auf einem Sockel (6) sitzt,
eine Kappe (8) auf den Sockel (6) gestellt wird, wobei die Kappe eine Durchgangsöffnung (8a) aufweist, die eine Linse (3) festhält und einen Lichtwellenleiter (9) in einem vorbestimmten Abstand zu der Linse halten kann,
die Kappe (8) auf dem Sockel (6) befestigt wird, nachdem die Kappe bezüglich der optischen Achse der Vorrichtung durch leichtes Bewegen der Kappe (8) in X- und in Y-Richtung, orthogonal zur optischen Achse, bei gleichzeitigem Betrieb der Laserdiode, ausgerichtet wurde,
der Lichtwellenleiter (9) in Richtung der Z-Achse bezüglich der optischen Achse ausgerichtet wird, indem nach Einführen eines Lichtwellenleiters (9) in die Durchgangsöffnung (8a) der Kappe (8) der Lichtwellenleiter (9) bei gleichzeitigem Betrieb der Laserdiode leicht in Z-Richtung bewegt wird.

5. Verfahren zur Herstellung einer Halbleiterlaser vorrichtung nach Anspruch 4, wobei die leichten Bewegungen der Kappe (8) in X- und in Y-Richtung automatisch und maschinell durchgeführt werden.

6. Verfahren zur Herstellung einer Halbleiterlaser Vorrichtung nach Anspruch 4, wobei die leichte Bewegung des Lichtwellenleiters (9) in Z-Richtung automatisch und maschinell ausgeführt wird.

## Revendications

1. Un dispositif consistant en un laser à semiconducteurs, comprenant une puce de diode laser (1) qui est montée sur un radiateur (2) lui-même monté sur une embase (6), et un chapeau (8) comportant un trou traversant (8a), ce chapeau étant fixé sur l'embase (6) de façon à couvrir la puce (8), comprenant en outre
une lentille (3) qui est retenue dans le trou traversant (8a) pour collimater la lumière qui est émise par la puce (1)
caractérisé en ce que
une fibre optique (9) pour le guidage de la lumière collimatée est fixée dans le trou traversant (8a), à une distance prédéterminée de la lentille.

2. Un dispositif consistant en un laser à semiconducteurs selon la revendication 1, dans lequel le chapeau (8) est fabriqué en Kovar.

3. Un dispositif consistant en un laser à semiconducteurs selon la revendication 1, dans lequel la lentille (3) est une lentille sphérique.

4. Un procédé de fabrication d'un dispositif consistant en un laser à semiconducteurs, comprenant les étapes suivantes :
on monte une puce de diode laser (1) sur un radiateur (2) qui est monté sur une embase (6);
on place un chapeau (8) sur l'embase (6), ce chapeau comportant un trou traversant (8a) qui retient une lentille (3) et qui est capable de retenir une fibre optique (9) à une distance prédéterminée de la lentille;
on fixe le chapeau (8) sur l'embase (6), après avoir aligné le chapeau par rapport à l'axe optique du dispositif, en déplaçant légèrement ce chapeau (8) dans des directions X et Y qui sont orthogonales à l'axe optique, avec la diode laser en fonctionnement; et
on effectue l'alignement de l'axe optique de la fibre optique (9) dans la direction de l'axe Z en déplaçant légèrement la fibre optique (9) dans la direction Z, avec la diode laser en fonctionnement, après avoir introduit une fibre optique (9) dans le trou traversant (8a) du chapeau (8).

5. Un procédé de fabrication d'un dispositif consistant en un laser à semiconducteurs selon la revendication 4, dans lequel les légers mouvements du chapeau (8) dans les directions X et Y sont accomplis mécaniquement, de façon automatique.

6. Un procédé de fabrication d'un dispositif consistant en un laser à semiconducteurs selon la revendication 4, dans lequel le léger mouvement de la fibre optique (9) dans la direction Z est accompli mécaniquement, de façon automatique.
